# EUROPÄISCHE PATENTSCHRIFT

(11) **EP 2 238 521 B1**
(45) Veröffentlichungstag und Bekanntmachung des Hinweises auf die Patenterteilung: **01.08.2012**
(21) Anmeldenummer: 08707468.8
(22) Anmeldetag: 31.01.2008
(51) Int. Cl.: G05B 19/418

(54) **VERFAHREN UND VORRICHTUNG ZUR VISUALISIERUNG EINER AUTOMATISIERUNGSTECHNISCHEN ANLAGE MIT EINEM WERKSTÜCK**
METHOD AND DEVICE FOR VISUALIZING AN INSTALLATION OF AUTOMATION SYSTEMS TOGETHER WITH A WORKPIECE
PROCÉDÉ ET DISPOSITIF DE VISUALISATION D'UNE INSTALLATION AUTOMATISÉE CONTENANT UNE PIÈCE À USINER

(43) Veröffentlichungstag der Anmeldung: 13.10.2010
(73) Patentinhaber: Siemens Aktiengesellschaft, 80333 München (DE)
(72) Erfinder: HEUSCHMANN, Christian, 39340 Haldensleben (DE); STOLPER, Thilo, 90402 Nürnberg (DE); WALTER, Dieter, 91093 Hessdorf (DE)
(86) Internationale Anmeldenummer: PCT/EP2008/000781
(87) Internationale Veröffentlichungsnummer: WO 2009/097865

(56) Entgegenhaltungen:
- EP-A- 1 749 621
- US-A- 636 399
- RESSLER R ET AL: "A VRML INTEGRATION METHODOLOGY FOR MANUFACTURING APPLICATIONS" PROCEEDINGS VRML 99. 4TH. SYMPOSIUM ON THE VIRTUAL REALITY MODELING LANGUAGE. PADERBORN, GERMANY, FEB. 23 - 26, 1999; [SYMPOSIUM ON THE VIRTUAL REALITY MODELING LANGUAGE], NEW YORK, NY : IEEE, US, 23. Februar 1999 (1999-02-23), Seiten 167-172, XP007900034 ISBN: 978-1-58113-079-9

## Beschreibung

Die Erfindung betrifft ein Verfahren und eine Vorrichtung zur Visualisierung einer automatisierungstechnischen Anlage mit einem Werkstück im Allgemeinen und im Besonderen ein Verfahren und eine Vorrichtung zur Visualisierung einer automatisierungstechnischen Anlage beinhaltend ein Werkstück, wobei das Werkstück zentriert in der Visualisierung dargestellt wird.

Automatisierte bzw. automatisierungstechnische Anlagen finden eine Vielzahl von Anwendungen insbesondere in der Produktion von Massenprodukten. Die Steuerung einer automatisierten Anlage und der in der automatisierten Anlage ablaufenden Prozessschritte, die an einzelnen beispielsweise zu verarbeitenden Werkstücken durchgeführt werden, wird mittels eines Steuerungsprogramms und bspw. einer damit programmierten SPS (Speicherprogrammierbare Steuerung, im Englischen auch PLC) durchgeführt. Zum Testen des Steuerungsprogramms und der danach ablaufenden Prozessschritte sind Simulationen mit Visualisierung, insbesondere 3D-Visualisierung, von automatisierten Anlagen verfügbar. Bekannte 3D-Visualisierungen von Bedienbildern einer automatisierten Anlage, von Simulationen einer automatisierten Anlage oder von Attrappen der automatisierten Anlage (so genannte Mock-Ups) stellen verschiedene Navigations-Modi für die Bewegung durch die 3D-Szene einer derart simulierten automatisierten Anlage bereit. So besteht nach den bekannten 3D-Visualisierungen die Möglichkeit, durch die Anlage zu fliegen, sich um feste Punkte zu drehen oder sich entlang deterministischer Pfade zu bewegen. Im Weiteren gibt es Kombinationen der genannten Navigationsmöglichkeiten oder Abwandlungen, die aus zusätzlichen Einschränkungen von Freiheitsgraden resultieren.

Aus der EP 1 749 621 A2 ist bereits eine Vorrichtung bekannt, welche in der Programmierung einer Anlage Verwendung findet. Hierbei kann zur Visualisierung eines Teils oder Werkstücks eine Selektion des Werkstücks erfolgen. In der Visualisierung wird dieses Werkstück dann zentriert angezeigt, sofern gewünscht.

Die Aufgabe der Erfindung ist es, ein verbessertes Verfahren zur Visualisierung einer automatisierten Anlage und eine entsprechende Vorrichtung anzugeben. Diese Aufgabe wird jeweils mit den Merkmalen der unabhängigen Patentansprüche gelöst. Bevorzugte Ausführungsformen und Weiterbildungen der Erfindung sind den jeweiligen Unteransprüchen zu entnehmen.

Aufgrund der häufig recht komplexen und zahlreichen Arbeitsgänge, die in einer automatisierten Anlage an einem Werkstück durchgeführt werden, kann es notwendig sein, ein einzelnes Werkstück auch in einer Visualisierung bzw. Simulation der automatisierten Anlage auszuwählen und über einen simulierten Verfahrensablauf zu verfolgen, um bspw. oben erwähntes Steuerungsprogramm vor der Implementierung in der automatisierten Anlage testen und verbessern zu können.

Nach einer Ausführungsform der Erfindung wird ein Verfahren zur Visualisierung eines Werkstücks in einer Visualisierung einer Automatisierungsanlage angegeben. Das Verfahren beinhaltet den Schritt der Bereitstellung von Selektionsmitteln für einen Benutzer der Visualisierung der automatisierten Anlage. Ferner erfolgen die Visualisierung der automatisierten Anlage mit dem Werkstück und eine Zentrierung des Werkstücks in der Visualisierung der automatisierten Anlage, wobei das Werkstück von dem Benutzer mittels der Selektionsmittel zuvor ausgewählt worden ist.

Bei der Visualisierung der automatisierten Anlage handelt es sich insbesondere um eine 3D-Visualisierung einer automatisierten Anlage bzw. einer 3D-Simulation der automatisierten Anlage. Die automatisierte Anlage beinhaltet ein oder mehrere Werkstücke, wobei Prozesse, welche von der automatisierten Anlage an dem Werkstück oder an den Werkstücken durchgeführt werden, in der 3D-Visualisierung abgebildet werden. Ein Werkstück ist dabei typischerweise um Größenordnungen kleiner als die automatisierungstechnische Anlage selbst. Nach dieser Ausführungsform werden Selektionsmittel für einen Benutzer der Visualisierung bereitgestellt, so dass dieser in der Darstellung der automatisierten Anlage das Werkstück auswählen kann, woraufhin eine Visualisierung der automatisierten Anlage dargestellt wird, bei der das Werkstück zentriert angeordnet ist.

Die Visualisierung der automatisierten Anlage mit dem Werkstück wird dabei typischerweise von einem Computersystem durchgeführt und die Darstellung der Visualisierung wird über einen Bildschirm ausgegeben. Dementsprechend handelt es sich beispielsweise bei den Selektionsmitteln um einen auf dem Bildschirm dargestellten Dialog, über den das entsprechende Werkstück ausgewählt werden kann. Alternativ hierzu kann der Benutzer direkt beispielsweise mittels des Zeigers einer Maus auf das Werkstück in der Visualisierung der automatischen Anlage klicken, wonach eine Zentrierung des Werkstückes in der Darstellung der automatisierten Anlage erfolgt.

Ein Vorteil des erfindungsgemäßen Verfahrens ist, dass der Benutzer direkt das von der automatisierten Anlage zu verarbeitende Werkstück beobachten und bspw. die Prozessschritte, die von der Anlage am Werkstück durchgeführt werden, verfolgen kann. Damit kann das oben erwähnte Steuerungsprogramm auch in Bezug auf die darin implementierten Steuerungsprozesse für die von der automatisierten Anlage durchzuführenden Arbeitsschritte an dem Werkstück vorab getestet werden. Dies führt letzten Endes auch dazu, dass ein derart getestetes Steuerungsprogramm, wenn es nach der Testphase in der eigentlichen automatisierten Anlage implementiert wird, dann weitaus weniger getestet werden muss, so dass die Stand- und Testzeiten an der realen automatisierten Anlage unter Umständen deutlich verkürzt werden können.

Nach einer Ausführungsform der Erfindung erfolgt eine zentrierte Visualisierung des Werkstücks auch bei einer Bewegung des Werkstücks in Bezug auf die automatisierte Anlage. Die 3D-Visualisierung der automatisierten Anlage ist, wie oben bereits angedeutet, nicht nur dazu ausgebildet, statische 3D-Darstellungen der automatisierten Anlage zu erzeugen und auf einem Bildschirm abzubilden, sondern die in der automatisierten Anlage ablaufenden Verfahrens- und Prozessschritte können visualisiert werden, indem bspw. eine Abfolge von einzelnen Ansichten, die die Verfahrensschritte wiedergeben, visualisiert wird. Nach dieser Ausführungsform erfolgt eine bei der Abbildung der einzelnen Verfahrens- bzw. Prozessschritte zentrierte Visualisierung des Werkstücks auch bei einer Bewegung des Werkstücks in Bezug auf die automatisierte Anlage, wonach es möglich ist, die von der automatisierten Anlage am Werkstück durchgeführten Prozesse zu simulieren und anschlie-βend zu bewerten.

Nach einer Ausführungsform der Erfindung wird zur Visualisierung der automatisierten Anlage ein festes erstes Koordinatensystem definiert, wobei sich die Position des Werkstücks im ersten Koordinatensystem bei einer Bewegung des Werkstücks in der automatisierten Anlage ändert, wobei das Werkstück in Bezug auf eine erste Richtung zentriert visualisiert wird, wobei die erste Richtung relativ zum ersten Koordinatensystem fest ist. Nach dieser Ausführungsform der Erfindung erfolgt die Darstellung der automatisierten Anlage mit dem zentrierten Werkstück aus einer in Bezug zum ersten Koordinatensystem festen Blickrichtung, wobei die Blickrichtung der ersten Richtung entspricht. Der Benutzer bzw. Betrachter der Visualisierung sieht damit lediglich unterschiedliche Ausschnitte der automatisierten Anlage mit dem selektierten Werkstück im Zentrum.

Nach einer Ausführungsform der Erfindung wird zur Visualisierung der automatisierten Anlage ein zweites Koordinatensystem definiert, wobei die Position des Werkstücks im zweiten Koordinatensystem fest ist. Das Werkstück wird in Bezug auf eine zweite Richtung zentriert visualisiert. Die zweite Richtung ist relativ zum zweiten Koordinatensystem fest. Bei dem zweiten Koordinatensystem handelt es sich somit um ein sich mit dem Werkstück mitbewegendes Koordinatensystem. Demnach blickt der Betrachter immer aus einer Richtung, der zweiten Richtung, auf das Werkstück. Während sich das Werkstück also in der Anlage bewegt, wird bei Änderung der Bewegungsrichtung des Werkstücks die Ansicht automatisch angepasst.

Nach einer Ausführungsform der Erfindung erfolgt die Visualisierung der automatisierten Anlage mit dem darin zentrierten Werkstück in Bezug auf eine dritte Richtung. Die dritte Richtung verläuft in einem konstanten Winkel zur Bewegungsrichtung des Werkstücks. Die Bewegungsrichtung des Werkstücks relativ zur automatisierten Anlage wird dabei ermittelt bspw. unter Verwendung des oben genannten ersten Koordinatensystems. Ferner erfolgt eine Detektion einer Bewegungsrichtungsänderung des Werkstücks relativ zur automatisierten Anlage in der Visualisierung der automatisierten Anlage. Daran schließt sich eine Neuausrichtung der dritten Richtung an, so dass die neuausgerichtete dritte Richtung im konstanten Winkel zur neuen Bewegungsrichtung des Werkstücks verläuft. Die automatisierte Anlage mit dem darin zentrierten Werkstück wird sodann in Bezug auf die geänderte neuausgerichtete dritte Richtung visualisiert. Der Beobachter blickt also nun aus Richtung der neuausgerichteten dritten Richtung auf die automatisierte Anlage bzw. auf das darin zentrierte Werkstück und hat während der Simulation der Bewegung des Werkstücks durch die Anlage den Eindruck, hinter dem Werkstück "herzulaufen".

Nach einer Ausführungsform der Erfindung ist die erste Richtung einstellbar. Nach einer weiteren Ausführungsform der Erfindung ist die zweite Richtung durch den Benutzer der Visualisierung, beispielsweise über einen auf dem Bildschirm abgebildeten Dialog, einstellbar. Entsprechendes gilt nach einer weiteren Ausführungsform für den oben genannten Winkel.

Nach einer Ausführungsform der Erfindung ist die Visualisierung der automatisierten Anlage zoombar. Insbesondere ist die Visualisierung der automatisierten Anlage mit dem zentrierten Werkstück zoombar. Dies hat den Vorteil, dass sich der Betrachter einerseits die Verfahrensabläufe am Werkstück genauer betrachten kann und andererseits aber, durch Änderung des Zoomfaktors, auch schnell während der 3D-Visualisierung einen

Überblick über die Lage des Werkstücks in der automatisierten Anlage gewinnen kann. Kurz gesagt, ermöglicht der Zoom dem Betrachter einerseits die Möglichkeit, ein globales Bild von der automatisierten Anlage mit dem in der Visualisierung zentrierten Werkstück zu erhalten und andererseits auch die Details der Verfahrensabläufe am Werkstück, die von der automatisierten Anlage durchgeführt werden, zu beobachten.

Nach einer Ausführungsform der Erfindung werden Teile der automatisierten Anlage, die das Werkstück bei der Visualisierung verdecken, ermittelt. Dazu wird beispielsweise fortlaufend untersucht, ob das Werkstück durch Verdeckungsobjekte, also Teile der automatisierten Anlage, die das Werkstück verdecken würden, verdeckt wird oder in einer nachfolgenden, noch nicht dargestellten Ansicht verdecken würden. Dies geschieht beispielsweise durch Berechnung von Strahlen zwischen den Ecken der Hülle des Werkstücks zu der Darstellung des Werkstücks auf dem Bildschirm und der Kollisionsprüfung dieser Strahlen mit den entsprechenden Modellen der Verdeckungsobjekte.

Nach einer Ausführungsform der Erfindung werden die Teile der automatisierten Anlage, die das Werkstück bei der Visualisierung verdecken würden, transparent dargestellt oder überhaupt nicht dargestellt. Dies hat den Vorteil, dass auch bei relativ komplexen Verfahrensabläufen, wo viele (Bau-)Teile der automatisierten Anlage in unmittelbarer Umgebung des Werkstückes sind, der Betrachter immer einen freien Blick auf das zentriert dargestellte Werkstück hat.

Nach einer Ausführungsform der Erfindung werden die Teile der automatisierten Anlage, die das Werkstück bei der Visualisierung verdecken würden, mit einer vorgegebenen Teileliste verglichen. Nur die in der vorgegebenen Teileliste enthaltenen Teile der automatisierten Anlage werden transparent oder überhaupt visualisiert. Dies hat den Vorteil, dass beispielsweise die Teile der Anlage, die für den entsprechenden Arbeitsprozess am Werkstück wichtig sind, nicht ausgeblendet werden, so dass sich der Betrachter diesen simulierten Arbeitsprozess einerseits mit dem Werkstück im Zentrum und andererseits mit dem entsprechenden Bauteil, das den Arbeitsprozess am Werkstück durchführt, anschauen kann, um damit zum Beispiel das vom Betrachter entwickelte und simulierte Steuerungsprogramm zu testen.

Alternativ werden nach einer Ausführungsform der Erfindung nur die in der vorgegebenen Teileliste nicht enthaltenen Teile der automatisierten Anlage transparent dargestellt oder nicht visualisiert werden. Dies hat insbesondere den Vorteil, dass es für den Nutzer der Simulation aufgrund der möglicherweise sehr vielen Teile der automatisierten Anlage komfortabler ist, die Teile in der Teileliste anzugeben, die der Nutzer zusammen mit dem Werkstück visualisiert haben will, anstatt die Teile anzugeben, die ausgeblendet werden sollen.

Nach einer Ausführungsform der Erfindung wird, falls Teile der automatisierten Anlage das Werkstück bei der Visualisierung verdecken würden, die Ansicht des Werkstücks und der automatisierten Anlage derart geschwenkt, dass keine Teile der automatisierten Anlage das Werkstück verdecken. Dies hat den Vorteil, dass keine Ausblendung bzw. transparente Darstellung der entsprechenden das Werkstück verdeckenden Teile erfolgt, sondern dass eben die Ansicht derart geschwenkt wird, dass der Betrachter freie Sicht auf das Werkstück hat ohne jedoch eine Einschränkung der Sicht auf die noch in der Ansicht enthaltenen Teile hinnehmen zu müssen.

Nach einer Ausführungsform der Erfindung wird die Ansicht auf das Werkstück zurück in einem geeigneten Maß in die Richtung der ursprünglichen Ansicht geschwenkt, so dass es zu keiner neuen Verdeckung kommt. Insbesondere wird die aktuelle Ansicht in die Richtung der ursprünglichen Ansicht zurückgesetzt, wenn keine Verdeckung des Werkstücks mehr gegeben ist.

In einem anderen Aspekt betrifft die Erfindung ein Computerprogrammprodukt mit computerausführbaren Instruktionen. Das Computerprogrammprodukt umfasst ein von einem Computer verwendbares Medium mit einem computerlesbaren Programm. Die Instruktionen sind zur Durchführung des erfindungsgemäßen Verfahrens ausgebildet, wenn diese von einem Computer ausgeführt werden.

In einem weiteren Aspekt betrifft die Erfindung eine Vorrichtung zur Visualisierung eines Werkstücks in einer automatisierten Anlage. Die Vorrichtung hat eine grafische Benutzeroberfläche zur Visualisierung der automatisierten Anlage mit dem Werkstück und Selektionsmittel, wobei das Werkstück in der Benutzeroberfläche mittels der Selektionsmittel durch einen Benutzer auswählbar ist. Die Vorrichtung umfasst ferner Mittel zur Zentrierung des Werkstücks in der Visualisierung der automatisierten Anlage nach Auswahl des Werkstücks durch den Benutzer.

Im Weiteren betrifft die Erfindung eine automatisierte Anlage mit einer erfindungsgemäßen Vorrichtung sowie ein Bedien- und Beobachtungsgerät für eine automatisierte Anlage mit einer erfindungsgemäßen Vorrichtung.

Eine Vorrichtung nach einer Ausführungsform der Erfindung bietet dem Benutzer eine einfache und intuitive Möglichkeit, in einer 3D-Visualisierung einer automatisierten Anlage ein Werkstück zu beobachten. Ferner können die einzelnen Prozessschritte, die innerhalb der automatisierten Anlage am Werkstück durchgeführt werden, beobachtet werden. Dabei kann der Benutzer die Ansicht auf das Werkstück so einstellen, dass sie/er das Werkstück unverdeckt und in einer geeigneten Größe auf dem Bildschirm und mit den wesentlichen Anlagenkomponenten im Blick hat. Damit bietet die Vorrichtung in einfacher und intuitiver Weise die Möglichkeit, aufgrund der werkstückzentrierten und werkstückverfolgenden Visualisierung Prozesse in der Anlage, die an dem Werkstück durchgeführt werden, zu verfolgen und nachzuvollziehen. Insbesondere ist die Verfolgung eines einzelnen Werkstückes sehr gut geeignet für die Verifikation der Steuerungsabläufe in einer automatisierungstechnischen Anlage und damit auch zum Testen des oben genannten Steuerungsprogramms.

Im Weiteren werden bevorzugte Ausführungsbeispiele der Erfindung mit Bezugnahme auf die Zeichnungen näher erläutert. Es zeigen:
- FIG 1: ein Blockdiagramm einer Vorrichtung zur Visualisierung eines Werkstückes in einer automatisierten Anlage,
- FIG 2: ein Flussdiagramm, das wesentliche Schritte eines erfindungsgemäßen Verfahrens zeigt,
- FIG 3: schematisch die Positionen eines Werkstücks während dreier verschiedener Bearbeitungsphasen in einer automatisierten Anlage,
- FIG 4: die zentrierten Visualisierungen des Werkstücks während der drei Bearbeitungsphasen bei in Bezug zum ersten, festen Koordinatensystem fester Betrachtungsrichtung,
- FIG 5: die drei zentrierten Visualisierungen des Werkstücks während der drei Bearbeitungsphasen bei in Bezug zum zweiten, mit dem Werkstück mitbewegten Koordinatensystem fester Betrachtungsrichtung,
- FIG 6: die zentrierten Visualisierungen des Werkstücks während der drei Bearbeitungsphasen bei einer bewegungsrichtungsabhängigen Anpassung der Ansichten,
- FIG 7: den Zusammenhang zwischen erstem und zweitem Koordinatensystem.

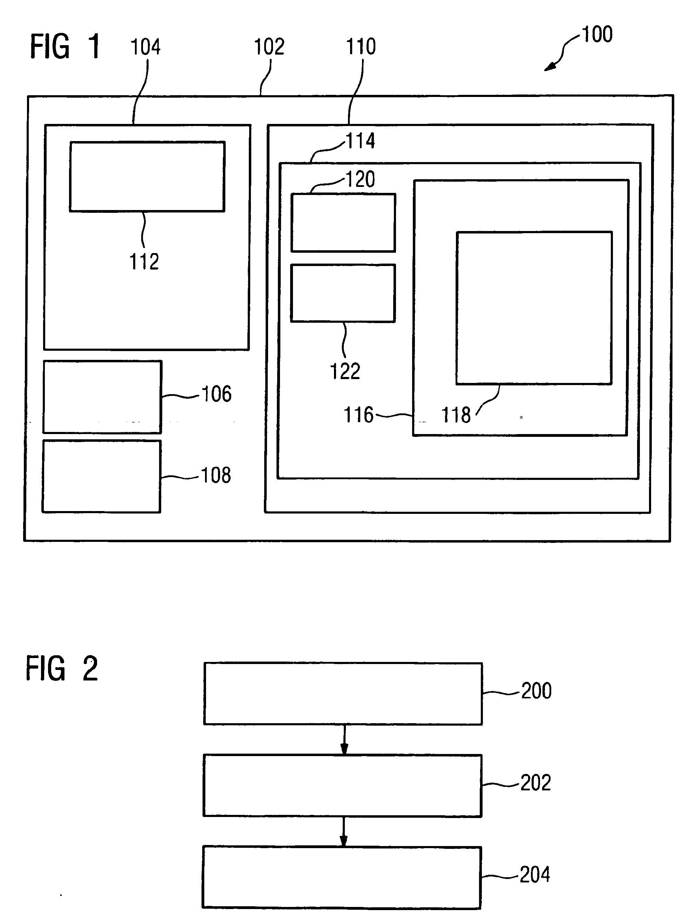

FIG 1 zeigt ein Blockdiagramm einer Vorrichtung 100 zur Visualisierung eines Werkstückes einer automatisierten Anlage. Die Vorrichtung 100 umfasst ein Computersystem 102. Das Computersystem 102 hat einen Mikroprozessor 104, einen Speicher 106, ein Eingabegerät 108 und einen Bildschirm 110.

Der Mikroprozessor 104 führt ein Computerprogramm 112 aus, das permanent auf dem Speicher 106 gespeichert ist und zur Ausführung vom Mikroprozessor 104 aus dem Speicher 106 gelesen worden ist. Das Computerprogramm 112 dient zur Visualisierung einer automatisierten Anlage mit einem Werkstück und erzeugt auf dem Bildschirm 110 eine Benutzeroberfläche 114 mit Selektionsmitteln 120 und einem Einstelldialog 122. Auf dem Bildschirm 110 wird ferner innerhalb der Benutzeroberfläche 114 die zu visualisierende Anlage 116 vom Computerprogramm 112 dargestellt. Die Selektionsmittel 120 können von einem Benutzer des Computersystems 102 verwendet werden, um ein Werkstück 118, das innerhalb der automatisierten Anlage 116 angeordnet ist, auszuwählen. Bei den Selektionsmitteln 120 kann es sich beispielsweise um eine Liste handeln, auf der alle Werkstücke in der simulierten automatisierten Anlage 116 angezeigt werden und der Benutzer kann sodann mittels des Eingabegeräts 108, bei dem es sich beispielsweise um eine Maus handeln kann, auf das entsprechende, von ihm ausgewählte Werkstück in dieser besagten Liste klicken. Nachdem der Benutzer mittels der Selektionsmittel 120 das Werkstück 118 ausgewählt hat, erfolgt eine 3D-Darstellung bzw. Visualisierung der automatisierten Anlage 116 derart, dass das Werkstück 118 zentriert dargestellt wird.

Demnach stellt das Computersystem 102 bzw. das Computerprogramm 112 dem Benutzer innerhalb der Benutzeroberfläche 116, welche zur Visualisierung einer automatisierten Anlage verwendet wird, Selektionsmittel 120 bereit, mit denen der Benutzer Werkstücke innerhalb der automatisierten Anlage 116 auswählen kann. In der Benutzeroberfläche 114 erfolgt ferner eine Visualisierung der automatisierten Anlage 116. Die Daten, die zur Visualisierung der automatisierten Anlage 116 benötigt werden, können beispielsweise auf dem Speicher 106 hinterlegt sein und vom Computerprogramm 112 ausgelesen werden, woraus die entsprechenden Daten für die Visualisierung berechnet werden. Über die Selektionsmittel 120 kann der Benutzer sodann ein Werkstück 118 auswählen, woraufhin die Visualisierung der automatisierten Anlage 116 derart geändert wird, dass das Werkstück 118 zentriert dargestellt ist. Ferner kann ein Durchlaufen des Werkstückes 118 durch die automatisierte Anlage 116, soweit der Verfahrensablauf in der automatisierten Anlage simuliert wird, derart weiterverfolgt werden, dass das Werkstück 118 im Wesentlichen immer zentriert dargestellt wird.

Bei der Visualisierung der automatisierten Anlage 116 mit dem in der Visualisierung zentrierten Werkstück 118 kann der Betrachter mit verschiedenen Blickrichtungen auf das Werkstück 118 bzw. die automatisierte Anlage 116 schauen. Diese Blickrichtungen sind beispielsweise über den Einstelldialog 122 einstellbar. Außerdem bietet der Einstelldialog 122 die Möglichkeit, in der Visualisierung der automatisierten Anlage 116 mit dem darin zentrierten Werkstück 118 hinein- bzw. herauszuzoomen.

Da automatisierungstechnische Anlagen im Allgemeinen sehr komplex aufgebaut sind und viele Teile umfassen, ist es durchaus möglich, dass Teile der automatisierten Anlage das Werkstück bei der Visualisierung verdecken würden. Das Computerprogrammprodukt 112 ist derart ausgebildet, dass die das Werkstück 118 verdeckenden Teile der automatisierten Anlage 116 berechnet werden und dann bei der Visualisierung transparent dargestellt oder auch nicht dargestellt werden. Insbesondere kann eine Berechnung bzw. Ermittlung der das Werkstück verdeckenden Teile zur Laufzeit der Simulation stattfinden. Alternativ kann das Computerprogramm 112 auch so ausgebildet sein, dass die jeweilige Ansicht des Werkstücks 118 derart geschwenkt wird, dass keine Teile der automatisierten Anlage das Werkstück mehr verdecken.

FIG 2 zeigt ein Flussdiagramm, welches wesentliche Schritte des erfindungsgemäßen Verfahrens zur Visualisierung eines Werkstücks in einer automatisierten Anlage zeigt. Nach Schritt 200 erfolgt die Bereitstellung von Selektionsmitteln für einen Benutzer der Visualisierung der automatisierten Anlage. In Schritt 202 erfolgt die Visualisierung der automatisierten Anlage mit dem Werkstück und in Schritt 204 wird das Werkstück zentriert in der Visualisierung der automatisierten

Anlage dargestellt in Antwort auf eine Auswahl des Werkstücks durch den Benutzer mittels der Selektionsmittel.

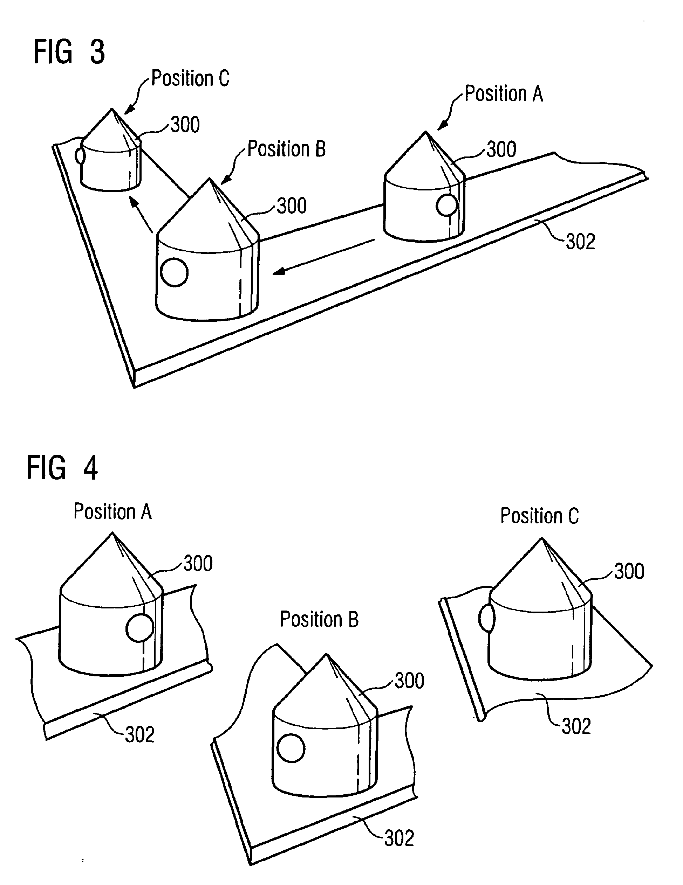

FIG 3 zeigt schematisch und beispielhaft drei Positionen, Position A, Position B und Position C, die ein Werkstück 300 in einer automatisierten Anlage 302, zum Beispiel während den entsprechenden Bearbeitungsphasen des Werkstücks 300 in der automatisierten Anlage 302, durchläuft. Die Pfeile in FIG 3 zwischen den Positionen des Werkstücks 300 beziehen sich auf die Bewegungsrichtung des Werkstücks 300 von Position A nach Position B beziehungsweise von Position B nach Position C.

FIG 4 zeigt die zentrierten Visualisierungen des Werkstücks 300 jeweils während einer der drei oben genannten Positionen A, B und C, bei im Bezug zu einem ersten, festen Koordinatensystem fester Blickrichtung. Bei der 3D-Visualisierung des Werkstücks 300 beziehungsweise der automatisierten Anlage 302 wird das Werkstück jeweils, nachdem es vom Benutzer beziehungsweise Betrachter der Visualisierung mittels der oben genannten Selektionsmittel ausgewählt wurde, zentriert dargestellt, so dass bei der Visualisierung des in FIG 3 erläuterten Durchlaufs des Werkstückes 300 durch die automatisierte Anlage 302 der Betrachter die in FIG 4 gezeigten Ansichten des Werkstücks 300 beziehungsweise der automatisierten Anlage 302 bei der Position A, beziehungsweise Position B, beziehungsweise Position C des Werkstückes 300 in der automatisierten Anlage 302 erhält. Dabei ist, wie oben erwähnt, die Blickrichtung des Betrachters immer in einer bestimmten Richtung, in Bezug auf das erste Koordinatensystem, welches fest ist, gegeben.

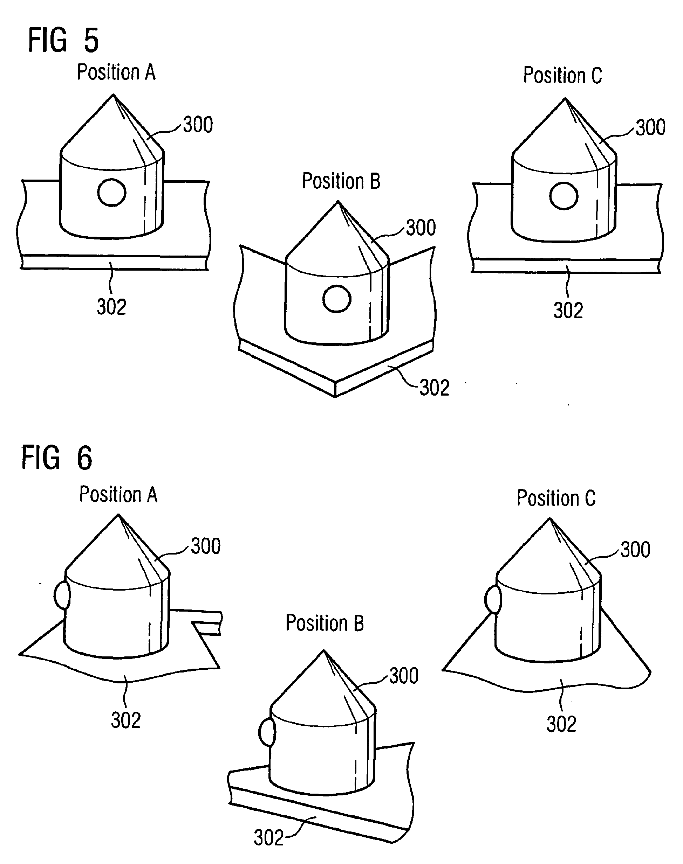

Demgegenüber zeigt FIG 5 die Ansichten des Betrachters auf das Werkstück 300 beziehungsweise die automatisierte Anlage 302 während der Positionen A, B bzw. C. Nachdem das Werkstück 300 vom Betrachter ausgewählt wurde, wird es, wie in FIG 5 gezeigt, jeweils zentriert abgebildet. Der Betrachter blickt aus einer Richtung auf das Werkstück 300 bzw. die Anlage 302, die in Bezug auf ein zweites, internes Koordinatensystem des Werkstücks fest ist. Damit ist die Ansicht des Betrachters auf das Werkstück 300 im Westlichen immer dieselbe, da die Ansicht aufgrund der Kopplung an das zweite Koordinatensystem bei einer Drehung des Werkstücks 300 relativ zur Anlage 302 entsprechend geändert wird.

FIG 6 zeigt die Ansichten des Betrachters auf das Werkstück 300 beziehungsweise die automatisierte Anlage 302 während den Positionen A, B bzw. C bei einer bewegungsrichtungsabhängigen Ansicht auf das Werkstück 300. Während sich das Werkstück 300 in der automatisierten Anlage 302 beispielsweise von Position A nach Position B (vgl. FIG 3) bewegt, wird bei Änderung der Bewegungsrichtung des Werkstücks die Ansicht automatisch angepasst. Die Ansicht beziehungsweise die Blickrichtung wird derart nachgeführt, dass bei einer Bewegungsrichtungsänderung des Werkstücks der Winkel zwischen dem Bewegungsvektor des Werkstücks und dem Abstand zwischen dem Werkstück und dem Betrachtungspunkt konstant bleibt. Der Betrachter hat daher den Eindruck, hinter dem Werkstück herzulaufen.

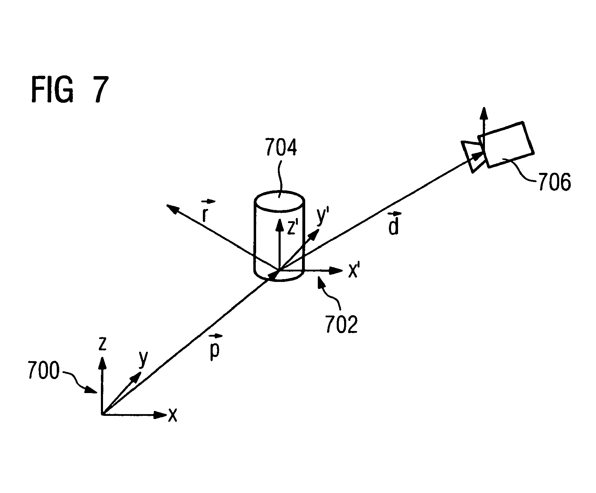

FIG 7 zeigt den Zusammenhang zwischen einem ersten Koordinatensystem 700 und einem zweiten Koordinatensystem 702. Das erste Koordinatensystem 700 ist ein festes Koordinatensystem, bspw. der hier nicht gezeigten automatisierten Anlage. Das zweite Koordinatensystem 702 ist ein internes Koordinatensystem eines Werkstücks 704. Die Visualisierung des Werkstücks 704 erfolgt aus der Blickrichtung eines Betrachters, die der Sicht einer Kamera 706 entspricht.

Nach einer Ausführungsform der Erfindung erfolgt eine zentrierte Visualisierung des Werkstücks 704 mit einer Ausrichtung der Kamera 706, die in Bezug auf das erste Koordinatensystem 700 konstant bleibt. Nach einer anderen Ausführungsform der Erfindung erfolgt eine zentrierte Visualisierung des Werkstücks 704 mit einer Ausrichtung der Kamera 706, die in Bezug auf das zweite Koordinatensystem 702 konstant bleibt. Der Betrag des Abstandsvektors **d** (Vektoren werden hier fettgedruckt dargestellt und in FIG 7 mit einem Pfeil über dem entsprechenden Buchstaben) zwischen Werkstück 704 und Kamera 706 kann dabei vom Betrachter bspw. über den Zoom eingestellt und während der Visualisierung angepasst werden. Der initiale Betrag das Abstandsvektors **d** kann bspw. aus einem konfigurierten Verhältnis zwischen der Größe des Visualisierungsfensters und der Hüllengeometrie des Werkstücks berechnet werden.

Nach einer weiteren Ausführungsform der Erfindung kann der Positionsvektor **p** des Werkstücks relativ zum ersten Koordinatensystem 700 erfasst werden. Der Positionsvektor **p** verläuft bspw. vom Ursprung des ersten Koordinatensystems 700 zum Ursprung des zweiten Koordinatensystems 702. Ferner erfolgt eine Anordnung der Kamera 706 in Bezug auf das Werkstück 704 derart, dass der Winkel zwischen dem Abstandsvektor **d** und dem Positionsvektor **p** konstant bleibt. Während sich das Werkstück 704 in der hier nicht gezeigten automatisierten Anlage bewegt, wird bei einer Änderung der Bewegungsrichtung r des Werkstücks 704 die Ausrichtung der Kamera 706 entsprechend angepasst, so dass der oben genannte Winkel konstant bleibt.

## Patentansprüche

1. Verfahren zur Visualisierung eines Werkstücks (118; 300; 704) in einer Visualisierung einer automatisierten Anlage (116; 302) mit den Schritten:
- Bereitstellung von Selektionsmitteln (120) für einen Benutzer der Visualisierung der automatisierten Anlage;
- Visualisierung der automatisierten Anlage mit dem Werkstück;
- Zentrierung des Werkstücks in der Visualisierung der automatisierten Anlage, wobei das Werkstück von dem Benutzer mittels der Selektionsmittel ausgewählt worden ist
**dadurch gekennzeichnet, dass**
eine zentrierte Visualisierung des Werkstücks auch bei einer Bewegung des Werkstücks in Bezug auf die automatisierte Anlage erfolgt.

2. Verfahren nach Anspruch 1, wobei zur Visualisierung der automatisierten Anlage ein festes erstes Koordinatensystem (700) definiert ist, wobei sich die Position des Werkstücks im ersten Koordinatensystem bei einer Bewegung des Werkstücks in der automatisierten Anlage ändert, wobei das Werkstück in Bezug auf eine erste Richtung zentriert visualisiert wird,
wobei die erste Richtung relativ zum ersten Koordinatensystem fest ist.

3. Verfahren nach Anspruch 1, wobei zur Visualisierung der automatisierten Anlage ein zweites Koordinatensystem (702) definiert ist, wobei die Position des Werkstücks im zweiten Koordinatensystem fest ist, wobei das Werkstück in Bezug auf eine zweite Richtung zentriert visualisiert wird, wobei die zweite Richtung relativ zum zweiten Koordinatensystem fest ist.

4. Verfahren nach Anspruch 1, ferner umfassend die Schritte:
- Visualisierung der automatisierten Anlage mit dem darin zentrierten Werkstück, wobei die Visualisierung in Bezug auf eine dritte Richtung erfolgt, wobei die dritte Richtung in einem konstanten Winkel zur Bewegungsrichtung des Werkstück verläuft;
- Detektion einer Änderung der Bewegungsrichtung des Werkstücks relativ zur automatisierten Anlage in der Visualisierung der automatisierten Anlage;
- Änderung der dritten Richtung derart, dass die dritte Richtung im konstanten Winkel zur neuen Bewegungsrichtung des Werkstücks verläuft und Visualisierung der automatisierten Anlage in Bezug auf die geänderte dritte Richtung.

5. Verfahren nach Anspruch 2, 3, oder 4, wobei die erste Richtung und/oder die zweite Richtung und/oder der Winkel durch den Benutzer einstellbar ist/sind.

6. Verfahren nach einem der vorhergehenden Ansprüche, wobei die Visualisierung der automatisierten Anlage mit dem zentrierten Werkstück zoombar ist.

7. Verfahren nach einer der vorhergehenden Ansprüche, wobei Teile der automatisierten Anlage, die das Werkstück bei der Visualisierung verdecken, ermittelt werden.

8. Verfahren nach Anspruch 7, wobei die Teile der automatisierten Anlage, die das Werkstück bei der Visualisierung verdecken würden, transparent dargestellt werden oder nicht visualisiert werden.

9. Verfahren nach Anspruch 7, wobei die Teile der automatisierten Anlage, die das Werkstück bei der Visualisierung verdecken würden, mit einer vorgegeben Teileliste verglichen werden und nur die in der vorgegebenen Teileliste enthaltenen Teile der automatisierten Anlage transparent dargestellt werden oder nicht visualisiert werden.

10. Verfahren nach Anspruch 7, wobei die Teile der automatisierten Anlage, die das Werkstück bei der Visualisierung verdecken würden, mit einer vorgegeben Teileliste verglichen werden und nur die in der vorgegebenen Teileliste nicht enthaltenen Teile der automatisierten Anlage transparent dargestellt werden oder nicht visualisiert werden.

11. Verfahren nach Anspruch 7, wobei, falls Teile der automatisierten Anlage das Werkstück bei der Visualisierung verdecken würden, die Ansicht des Werkstücks und der automatisierten Anlage derart geschwenkt wird, dass keine Teile der automatisierten Anlage das Werkstück verdecken.

12. Verfahren nach Anspruch 10, wobei die Ansicht auf das Werkstück zurück in einem geeigneten Maß in die Richtung der ursprünglichen Ansicht geschwenkt wird, so dass es zu keiner neuen Verdeckung kommt.

13. Computerprogrammprodukt (112) mit computerausführbaren Instruktionen, wobei die Instruktionen zur Durchführung des Verfahrens nach den vorhergehenden Ansprüchen ausgebildet sind, wenn diese von einem Computer (102) ausgeführt werden.

14. Vorrichtung zur Visualisierung einer automatisierten Anlage (116; 302) mit einem Werkstück (118; 300; 704) beinhaltend:
- eine graphische Benutzeroberfläche (114) zur Visualisierung der automatisierten Anlage mit dem Werkstück;
- Selektionsmittel (120), wobei das Werkstücks in der Benutzeroberfläche mittels der Selektionsmittel durch einen Benutzer auswählbar ist;
- Mittel zur Zentrierung (112) des Werkstücks in der Visualisierung der automatisierten Anlage nach Auswahl des Werkstücks durch den Benutzer, **gekennzeichnet durch** Mittel zur Verfolgung des Werkstücks in der automatisierten Anlage bei einer Bewegung des Werkstücks relativ zur automatisierten Anlage, wobei die Mittel zur Zentrierung des Werkstücks so ausgebildet sind, dass eine zentrierte Visualisierung des Werkstücks auch bei einer Bewegung des Werkstücks in Bezug auf die automatisierte Anlage erfolgt.

15. Vorrichtung nach Anspruch 14, ferner mit Mitteln zur Erzeugung eines ersten Koordinatensystems (700), wobei das erste Koordinatensystem in Bezug auf die automatisierte Anlage fest ist, wobei sich die Position des Werkstücks im ersten Koordinatensystem bei einer Bewegung des Werkstücks in der automatisierten Anlage ändert, wobei das Werkstück in Bezug auf eine erste Richtung zentriert visualisierbar ist, wobei die erste Richtung im ersten Koordinatensystem fest ist.

16. Vorrichtung nach Anspruch 14, ferner mit Mitteln zur Erzeugung eines zweiten Koordinatensystems (702), wobei das zweite Koordinatensystem in Bezug auf das Werkstück fest ist, wobei das Werkstück in Bezug auf eine zweite Richtung zentriert visualisierbar ist, wobei die zweite Richtung im zweiten Koordinatensystem fest ist.

17. Vorrichtung nach Anspruch 14, ferner umfassend:
- Mittel zur Visualisierung der automatisierten Anlage mit dem darin zentrierten Werkstück, wobei die Visualisierung in Bezug auf eine dritte Richtung darstellbar ist, wobei die dritte Richtung in einem konstanten Winkel zur Bewegungsrichtung des Werkstück verläuft;
- Mittel zur Detektion einer Änderung der Bewegungsrichtung des Werkstücks relativ zur automatisierten Anlage in der Visualisierung der automatisierten Anlage;
- Mittel zur Anpassung der dritten Richtung derart, dass die dritte Richtung im konstanten Winkel zur neuen Bewegungsrichtung des Werkstücks verläuft und
- Mittel zur Visualisierung der automatisierten Anlage in Bezug auf die geänderte dritte Richtung.

18. Vorrichtung nach Anspruch 15, 16 oder 17, wobei die erste Richtung und/oder die zweite Richtung und/oder der Winkel durch den Benutzer über die Benutzeroberfläche einstellbar ist/sind.

19. Vorrichtung nach einem der vorhergehenden Ansprüche 14 bis 18, mit Mitteln zum Zoomen in der Visualisierung der automatisierten Anlage mit dem zentrierten Werkstück in der Benutzeroberfläche, wobei die Mittel zum Zoomen vom Benutzer verwendbar sind.

20. Vorrichtung nach einer der vorhergehenden Ansprüche 14 bis 19, mit Mitteln zur Ermittlung der Teile der automatisierten Anlage, die das Werkstück bei der Visualisierung verdecken.

21. Vorrichtung nach Anspruch 18, wobei die Mittel zur Ermittlung so ausgebildet sind, dass die Teile der automatisierten Anlage bei einer Bewegung des Werkstücks relativ zur automatisierten Anlage berechenbar sind, so dass die Teile bei der Visualisierung transparent oder nicht darstellbar sind.

22. Vorrichtung nach Anspruch 20 oder 21, wobei die Vorrichtung eine Datenbank umfasst, wobei die Datenbank eine Teileliste der automatisierten Anlage umfasst, wobei die Teile, die das Werkstück bei der Visualisierung verdecken würden, mit der Teileliste verglichen werden und nur die in der vorgegebenen Teileliste enthaltenen Teile der automatisierten Anlage transparent darstellbar oder ausblendbar sind.

23. Vorrichtung nach Anspruch 21, wobei die Vorrichtung eine Datenbank umfasst, wobei die Datenbank eine Teileliste der automatisierten Anlage umfasst, wobei die Teile, die das Werkstück bei der Visualisierung verdecken würden, mit der Teileliste verglichen werden und die nicht in der vorgegebenen Teileliste enthaltenen Teile der automatisierten Anlage transparent darstellbar oder ausblendbar sind.

24. Vorrichtung nach einem der vorhergehenden Ansprüche 14 bis 23, ferner mit Mitteln zum Anpassen der Ansicht, so dass, falls Teile der automatisierten Anlage das Werkstück bei der Visualisierung verdecken würden, die Ansicht des Werkstücks und der automatisierten Anlage geändert wird, dass keine Teile der automatisierten Anlage das Werkstück verdecken.

25. Vorrichtung nach 24, wobei die Ansicht auf das Werkstück zurück in einem geeigneten Maß in die Richtung der ursprünglichen Ansicht zurücksetzbar ist, so dass es zu keiner neuen Verdeckung kommt.

26. Automatisierte Anlage mit einer Vorrichtung nach einem der Ansprüche 14 bis 25.

27. Bedien- und Beobachtungsgerät für eine automatisierte Anlage, wobei das Bedien- und Beobachtungsgerät die Vorrichtung nach einem der Ansprüche 14 bis 25 umfasst.

## Claims

1. Method for visualising a workpiece (118; 300; 704) in a visualisation of an automated system (116; 302), wherein the method comprises the steps of:
- providing selection means (120) for a user of the visualisation of the automated system;
- visualising the automated system with the workpiece;
- centring the workpiece in the visualisation of the automated system, the workpiece having been selected by the user with the aid of the selection means,
**characterised in that**
a centred visualisation of the workpiece is provided even if the workpiece moves in relation to the automated system.

2. Method according to claim 1, wherein a fixed first coordinate system (700) is defined for the purpose of visualising the automated system, wherein the position of the workpiece in the first coordinate system changes if the workpiece moves in the automated system, wherein the workpiece is visualised centred in relation to a first direction, wherein the first direction is fixed relative to the first coordinate system.

3. Method according to claim 1, wherein a second coordinate system (702) is defined for the purpose of visualising the automated system, wherein the position of the workpiece in the second coordinate system is fixed, wherein the workpiece is visualised centred in relation to a second direction, wherein the second direction is fixed relative to the second coordinate system.

4. Method according to claim 1, additionally comprising the steps of:
- visualising the automated system with the workpiece centred therein, wherein the visualisation is provided in relation to a third direction, wherein the third direction runs at a constant angle to the direction of movement of the workpiece;
- detecting a change in the direction of movement of the workpiece relative to the automated system in the visualisation of the automated system;
- changing the third direction in such a way that the third direction runs at the constant angle to the new direction of movement of the workpiece and visualising the automated system in relation to the changed third direction.

5. Method according to claim 2, 3 or 4, wherein the first direction and/or the second direction and/or the angle can be set by the user.

6. Method according to one of the preceding claims, wherein the visualisation of the automated system with the centred workpiece is zoomable.

7. Method according to one of the preceding claims, wherein parts of the automated system that conceal the workpiece during the visualisation are ascertained.

8. Method according to claim 7, wherein the parts of the automated system that would conceal the workpiece during the visualisation are displayed transparently or are not visualised.

9. Method according to claim 7, wherein the parts of the automated system that would conceal the workpiece during the visualisation are compared with a predefined parts list and only the parts of the automated system that are contained in the predefined parts list are displayed transparently or are not visualised.

10. Method according to claim 7, wherein the parts of the automated system that would conceal the workpiece during the visualisation are compared with a predefined parts list and only the parts of the automated system that are not contained in the predefined parts list are displayed transparently or are not visualised.

11. Method according to claim 7, wherein if parts of the automated system would conceal the workpiece during the visualisation, the view of the workpiece and the automated system is pivoted such that no parts of the automated system conceal the workpiece.

12. Method according to claim 10, wherein the view onto the workpiece is pivoted to a suitable extent back in the direction of the original view such that no new concealment occurs.

13. Computer program product (112) comprising computer-executable instructions, wherein the instructions are embodied for the purpose of performing the method according to the preceding claims when they are executed by a computer (102).

14. Device for visualising an automated system (116; 302) with a workpiece (118; 300; 704), the device including:
- a graphical user interface (114) for visualising the automated system with the workpiece;
- selection means (120), wherein the workpiece can be selected in the user interface by a user with the aid of the selection means;
- means for centring (112) the workpiece in the visualisation of the automated system after the workpiece has been selected by the user,
**characterised by** means for tracking the workpiece in the automated system if the workpiece moves relative to the automated system, wherein the means for centring the workpiece are embodied in such a way that a centred visualisation of the workpiece is provided even if the workpiece moves relative to the automated system.

15. Device according to claim 14, additionally having means for generating a first coordinate system (700), wherein the first coordinate system is fixed in relation to the automated system, wherein the position of the workpiece in the first coordinate system changes if the workpiece moves in the automated system, wherein the workpiece can be visualised centred in relation to a first direction, wherein the first direction is fixed in the first coordinate system.

16. Device according to claim 14, additionally having means for generating a second coordinate system (702), wherein the second coordinate system is fixed in relation to the workpiece, wherein the workpiece can be visualised centred in relation to a second direction, wherein the second direction is fixed in the second coordinate system.

17. Device according to claim 14, additionally comprising:
- means for visualising the automated system with the workpiece centred therein, wherein the visualisation can be displayed in relation to a third direction, wherein the third direction runs at a constant angle to the direction of movement of the workpiece;
- means for detecting a change in the direction of movement of the workpiece relative to the automated system in the visualisation of the automated system;
- means for adjusting the third direction in such a way that the third direction runs at the constant angle to the new direction of movement of the workpiece, and
- means for visualising the automated system in relation to the changed third direction.

18. Device according to claim 15, 16 or 17, wherein the first direction and/or the second direction and/or the angle can be set by the user via the user interface.

19. Device according to one of the preceding claims 14 to 18, having means for zooming in the visualisation of the automated system with the centred workpiece in the user interface, wherein the means for zooming can be used by the user.

20. Device according to one of the preceding claims 14 to 19, having means for ascertaining the parts of the automated system that conceal the workpiece during the visualisation.

21. Device according to claim 18, wherein the means for ascertaining are embodied in such a way that if the workpiece moves relative to the automated system the parts of the automated system can be computed such that the parts can be displayed transparently during the visualisation or are not displayable.

22. Device according to claim 20 or 21, wherein the device includes a database, wherein the database contains a parts list of the automated system, wherein the parts that would conceal the workpiece during the visualisation are compared with the parts list and only the parts of the automated system that are contained in the predefined parts list can be displayed transparently or masked out.

23. Device according to claim 21, wherein the device includes a database, wherein the database contains a parts list of the automated system, wherein the parts that would conceal the workpiece during the visualisation are compared with the parts list and the parts of the automated system that are not contained in the predefined parts list can be displayed transparently or masked out.

24. Device according to one of the preceding claims 14 to 23, additionally having means for adjusting the view in such a way that if parts of the automated system would conceal the workpiece during the visualisation, the view of the workpiece and the automated system is adjusted such that no parts of the automated system conceal the workpiece.

25. Device according to claim 24, wherein the view onto the workpiece can be reset to a suitable extent back in the direction of the original view such that no new concealment occurs.

26. Automated system having a device according to one of claims 14 to 25.

27. Control and monitoring device for an automated system, wherein the control and monitoring device includes the device according to one of claims 14 to 25.

## Revendications

1. Procédé de visualisation d'une pièce à usiner (118 ; 300 ; 704) dans une visualisation d'une installation automatisée (116 ; 302), comportant les étapes suivantes :
- mise à disposition de moyens de sélection (120) pour un utilisateur de la visualisation de l'installation automatisée ;
- visualisation de l'installation automatisée avec la pièce à usiner ;
- centrage de la pièce à usiner dans la visualisation de l'installation automatisée, la pièce à usiner ayant été sélectionnée par l'utilisateur au moyen des moyens de sélection,
**caractérisé en ce qu'**une visualisation centrée de la pièce à usiner se fait également dans le cas d'un déplacement de la pièce à usiner par rapport à l'installation automatisée.

2. Procédé selon la revendication 1, un premier système de coordonnées fixe (700) étant défini pour visualiser l'installation automatisée, la position de la pièce à usiner dans le premier système de coordonnées se modifiant lors d'un déplacement de la pièce à usiner dans l'installation automatisée, la pièce à usiner étant visualisée de manière centrée par rapport à une première direction, la première direction étant fixe relativement au premier système de coordonnées.

3. Procédé selon la revendication 1, un deuxième système de coordonnées (702) étant défini pour visualiser l'installation automatisée, la position de la pièce à usiner dans le deuxième système de coordonnées étant fixe, la pièce à usiner étant visualisée de manière centrée par rapport à une deuxième direction, la deuxième direction étant fixe relativement au deuxième système de coordonnées.

4. Procédé selon la revendication 1, comprenant en outre les étapes suivantes :
- visualisation de l'installation automatisée avec la pièce à usiner centrée dedans, la visualisation se faisant par rapport à une troisième direction, la troisième direction étant à angle constant par rapport à la direction du déplacement de la pièce à usiner ;
- détection d'une modification de la direction du déplacement de la pièce à usiner relativement à l'installation automatisée dans la visualisation de l'installation automatisée ;
- modification de la troisième direction de manière telle que la troisième direction est à angle constant par rapport à la nouvelle direction du déplacement de la pièce à usiner, et visualisation de l'installation automatisée par rapport à la troisième direction modifiée.

5. Procédé selon la revendication 2, 3 ou 4, la première direction et/ou la deuxième direction et/ou l'angle pouvant être réglés par l'utilisateur.

6. Procédé selon l'une des revendications précédentes, la visualisation de l'installation automatisée avec la pièce à usiner centrée pouvant être zoomée.

7. Procédé selon l'une des revendications précédentes, des parties de l'installation automatisée qui cachent la pièce à usiner lors de la visualisation étant détectées.

8. Procédé selon la revendication 7, les parties de l'installation automatisée qui cacheraient la pièce à usiner lors de la visualisation étant représentées en transparent ou n'étant pas visualisées.

9. Procédé selon la revendication 7, les parties de l'installation automatisée qui cacheraient la pièce à usiner lors de la visualisation étant comparées à une liste de parties donnée et seules les parties de l'installation automatisée qui sont contenues dans la liste de parties donnée étant représentées en transparent ou n'étant pas visualisées.

10. Procédé selon la revendication 7, les parties de l'installation automatisée qui cacheraient la pièce à usiner lors de la visualisation étant comparées à une liste de parties donnée et seules les parties de l'installation automatisée qui ne sont pas contenues dans la liste de parties donnée étant représentées en transparent ou n'étant pas visualisées.

11. Procédé selon la revendication 7, la vue de la pièce à usiner et de l'installation automatisée subissant un pivotement tel, dans le cas où des parties de l'installation automatisée cacheraient la pièce à usiner lors de la visualisation, qu'aucune partie de l'installation automatisée ne cache la pièce à usiner.

12. Procédé selon la revendication 10, la vue de la pièce à usiner subissant un pivotement de retour dans une mesure appropriée en direction de la vue initiale de sorte qu'il ne se produit pas de nouveau masquage.

13. Produit de programme informatique (112) avec des instructions exécutables par ordinateur, les instructions étant telles qu'elles permettent l'exécution du procédé selon les revendications précédentes lorsqu'elles sont exécutées par un ordinateur (102).

14. Dispositif de visualisation d'une installation automatisée (116 ; 302) avec une pièce à usiner (118 ; 300 ; 704), comprenant :
- une surface utilisateur graphique (114) pour visualiser l'installation automatisée avec la pièce à usiner ;
- des moyens de sélection (120), la pièce à usiner pouvant être sélectionnée par un utilisateur dans la surface utilisateur au moyen des moyens de sélection ;
- des moyens pour centrer (112) la pièce à usiner dans la visualisation de l'installation automatisée après la sélection de la pièce à usiner par l'utilisateur, **caractérisé par** des moyens de suivi de la pièce à usiner dans l'installation automatisée lors d'un déplacement de la pièce à usiner relativement à l'installation automatisée, les moyens de centrage de la pièce à usiner étant réalisés de manière telle qu'une visualisation centrée de la pièce à usiner se fait également lors d'un déplacement de la pièce à usiner par rapport à l'installation automatisée.

15. Dispositif selon la revendication 14, avec en outre des moyens pour générer un premier système de coordonnées (700), le premier système de coordonnées étant fixe par rapport à l'installation automatisée, la position de la pièce à usiner dans le premier système de coordonnées se modifiant lors d'un déplacement de la pièce à usiner dans l'installation automatisée, la pièce à usiner pouvant être visualisée de manière centrée par rapport à une première direction, la première direction étant fixe dans le premier système de coordonnées.

16. Dispositif selon la revendication 14, avec en outre des moyens pour générer un deuxième système de coordonnées (702), le deuxième système de coordonnées étant fixe par rapport à la pièce à usiner, la pièce à usiner pouvant être visualisée de manière centrée par rapport à une deuxième direction, la deuxième direction étant fixe dans le deuxième système de coordonnées.

17. Dispositif selon la revendication 14, comprenant en outre :
- des moyens pour visualiser l'installation automatisée avec la pièce à usiner centrée dedans, la visualisation pouvant être représentée par rapport à une troisième direction, la troisième direction étant à angle constant par rapport à la direction du déplacement de la pièce à usiner ;
- des moyens pour détecter une modification de la direction du déplacement de la pièce à usiner relativement à l'installation automatisée dans la visualisation de l'installation automatisée ;
- des moyens pour adapter la troisième direction de manière telle que la troisième direction soit à angle constant par rapport à la nouvelle direction du déplacement de la pièce à usiner, et
- des moyens pour visualiser l'installation automatisée par rapport à la troisième direction modifiée.

18. Dispositif selon la revendication 15, 16 ou 17, la première direction et/ou la deuxième direction et/ou l'angle pouvant être réglés par l'utilisateur via la surface utilisateur.

19. Dispositif selon l'une des revendications précédentes 14 à 18, avec des moyens pour zoomer dans la visualisation de l'installation automatisée avec la pièce à usiner centrée dans la surface utilisateur, les moyens pour zoomer pouvant être utilisés par l'utilisateur.

20. Dispositif selon l'une des revendications précédentes 14 à 19, avec des moyens pour détecter les parties de l'installation automatisée qui cachent la pièce à usiner lors de la visualisation.

21. Dispositif selon la revendication 18, les moyens de détection étant réalisés de manière telle que les parties de l'installation automatisée peuvent être calculées lors d'un déplacement de la pièce à usiner relativement à l'installation automatisée de sorte que les parties, lors de la visualisation, peuvent être représentées en transparent ou ne peuvent pas être représentées.

22. Dispositif selon la revendication 20 ou 21, le dispositif comprenant une base de données, la base de données comprenant une liste de parties de l'installation automatisée, les parties qui cacheraient la pièce à usiner lors de la visualisation étant comparées à la liste de parties et seules les parties de l'installation automatisée qui sont contenues dans la liste de parties donnée pouvant être représentées en transparent ou pouvant être supprimées.

23. Dispositif selon la revendication 21, le dispositif comprenant une base de données, la base de données comprenant une liste de parties de l'installation automatisée, les parties qui cacheraient la pièce à usiner lors de la visualisation étant comparées à la liste de parties et les parties de l'installation automatisée qui ne sont pas contenues dans la liste de parties donnée pouvant être représentées en transparent ou pouvant être supprimées.

24. Dispositif selon l'une des revendications précédentes 14 à 23, comprenant en outre des moyens pour adapter la vue de manière telle que, dans le cas où des parties de l'installation automatisée cacheraient la pièce à usiner lors de la visualisation, la vue de la pièce à usiner et de l'installation automatisée est modifiée de manière telle qu'aucune partie de l'installation automatisée ne cache la pièce à usiner.

25. Dispositif selon la revendication 24, la vue de la pièce à usiner pouvant être repositionnée dans une mesure appropriée en direction de la vue initiale de sorte qu'il ne se produit pas de nouveau masquage.

26. Installation automatisée avec un dispositif selon l'une des revendications 14 à 25.

27. Appareil de commande et d'observation pour une installation automatisée, l'appareil de commande et d'observation comprenant le dispositif selon l'une des revendications 14 à 25.
